# EUROPEAN PATENT SPECIFICATION

(11) **EP 4 420 965 B1**
(45) Date of publication and mention of the grant of the patent: **23.04.2025**
(21) Application number: 23214871.8
(22) Date of filing: 07.12.2023
(51) Int. Cl.: B62J 1/04, B62J 1/12

(54) **STRADDLED VEHICLE**
GRÄTSCHSITZFAHRZEUG
VÉHICULE À SELLE

(30) Priority: 22.02.2023 JP 2023026057
(43) Date of publication of application: 28.08.2024
(73) Proprietor: Yamaha Hatsudoki Kabushiki Kaisha, Iwata-shi, Shizuoka-ken 438-8501 (JP)
(72) Inventor: OGAKI, Tsubasa, Shizuoka-ken, 438-8501 (JP); UDA, Natsuki, Shizuoka-ken, 438-8501 (JP)
(74) Representative: Studio Torta S.p.A.

(56) References cited:
- CN-A- 101 450 690
- CN-Y- 2 908 291
- JP-U- S53 122 864
- US-A1- 2008 178 427

## Description

### Technical field

The present invention relates to a straddled vehicle having a seat rotatably supported by a hinge on the vehicle body.

### Prior art

A straddled vehicle has been known in the art that includes a seat supported on the vehicle body and a hinge for rotatably linking the seat to the vehicle body. For example, Japanese Laid-Open Utility Model Publication No. S61-14946 discloses a motorcycle having a seat rotatably supported by a hinge on the vehicle body.

While the motorcycle is running, vibration from the engine is transmitted to the seat. To reduce the vibration transmitted from the vehicle body to the seat, an elastic member is provided between the vehicle body and the seat. In the motorcycle disclosed in Japanese Laid-Open Utility Model Publication No. S61-14946, an elastic member is arranged between the seat and the vehicle body, which is compressed from above and below. The elastic member is sandwiched between the seat and the vehicle body.

Patent Document No. 1: Japanese Laid-Open Utility Model Publication No. S61-14946. Document JPS53122864U, which discloses all the features of the preamble of independent claim 1, also discloses a known straddled vehicle with a seat rotatably supported by a hinge on the vehicle body.

With the motorcycle described above, an elastic member is sandwiched between the seat and the vehicle body from above and below, and this elastic member suppresses the vibration in the up-down direction transmitted from the vehicle body to the seat. However, the vibration transmitted from the vehicle body to the seat is not limited to vibration in the up-down direction but also includes vibration in the front-rear direction. With the motorcycle described above, vibration in a front-rear direction cannot be sufficiently suppressed.

### Description of the invention

The present invention has been made in view of the above, and an object thereof is to provide a straddled vehicle having a seat rotatably linked to a vehicle body by a hinge, and being capable of suppressing vibration in the up-down direction and the front-rear direction transmitted from the vehicle body to the seat.

A straddled vehicle disclosed herein includes: a vehicle body; a seat supported on the vehicle body; and a hinge that links together the seat and the vehicle body, wherein. The hinge includes: a pin that is fixed to one of the vehicle body and the seat and is extending in a left-right direction; an outer cylindrical member having a cylindrical shape that is fixed to the other one of the vehicle body and the seat, into which the pin is inserted, and that is capable of rotating relative to the pin; and a damper having a cylindrical shape made of an elastic member that is inserted into the outer cylindrical member and into which the pin is inserted. Note that the term "fix" as used herein refers both to direct fixing and to indirect fixing via another member.

With the straddled vehicle described above, the damper having a cylindrical shape is interposed between the pin fixed to one of the vehicle body and the seat, and the outer cylindrical member having a cylindrical shape fixed to the other one of the vehicle body and the seat. Since the pin is inserted in the damper, the damper covers the periphery of the pin. Since the damper is inserted in the outer cylindrical member, the outer cylindrical member covers the periphery of the damper. A part of the damper is sandwiched between the pin and the outer cylindrical member from above and below, and another part of the damper is sandwiched between the pin and the outer cylindrical member from front and back. Thus, vibration in the up-down direction and vibration in the front-rear direction transmitted from the vehicle body to the seat are suppressed by the damper. With the straddled vehicle described above, vibration in the up-down direction and vibration in the front-rear direction transmitted from the vehicle body to the seat can be suppressed.

A center axis of the outer cylindrical member may extend in the left-right direction.

The pin may extend through inside of the outer cylindrical member.

A center axis of the damper may extend in the left-right direction.

The damper may extend through inside of the outer cylindrical member; and the pin may extend through inside of the damper.

The damper may have an outer circumferential surface; and a plurality of grooves extending in the left-right direction may be formed on the outer circumferential surface.

This makes it easier for the damper to deform when inserting the damper into the outer cylindrical member. The damper can be inserted into the outer cylindrical member relatively easily, thereby facilitating the assembly of the hinge. Since the vibration absorbing performance of the damper is improved, vibration transmitted from the vehicle body to the seat can be more effectively suppressed.

While there is no particular limitation on the number of grooves, if the number of grooves is small, the operation of inserting the damper into the outer cylindrical member tends to be not easy, and if the number of grooves is large, it tends to be more difficult for the vehicle body to stably support the pin via the damper. In view of this, the number of grooves may be 6 to 10.

The grooves may be arranged evenly in a circumferential direction on the outer circumferential surface.

This facilitates the operation of inserting the damper into the outer cylindrical member.

The damper may include a first damper having a cylindrical shape and a second damper having a cylindrical shape that is arranged rightward of first damper.

This facilitates the operation of inserting the damper into the outer cylindrical member. For example, by inserting the first damper from the left side of the outer cylindrical member and inserting the second damper from the right side of the outer cylindrical member, the damper can be easily inserted inside the outer cylindrical member. This further facilitates the assembly of the hinge.

A gap may be provided between the first damper and the second damper.

Thus, even if there is a dimension error, for the left-right direction, in the outer cylindrical member, the first damper or the second damper, it is possible to easily arrange the first damper and the second damper inside the outer cylindrical member. This facilitates the assembly of the hinge.

The first damper may include a first cylindrical portion and a first flange portion that extends outward in a radial direction from a left end of the first cylindrical portion. The second damper may include a second cylindrical portion and a second flange portion that extends outward in a radial direction from a right end of the second cylindrical portion.

Thus, the first damper can be positioned by inserting the first damper from the left side of the outer cylindrical member and placing the first flange portion against the left end of the outer cylindrical member. Similarly, the second damper can be positioned by inserting the second damper from the right side of the outer cylindrical member and placing the second flange portion against the right end of the outer cylindrical member. This further facilitates the assembly of the hinge.

According to the invention, the straddled vehicle includes an inner cylindrical member that is inserted into the damper and into which the pin is inserted. One of the pin and the inner cylindrical member may rotatably support the other one of the pin and the inner cylindrical member.

Thus, with the inner cylindrical member interposed between the damper and the pin, one of the pin and the outer cylindrical member can be stably and rotatably supported relative to the other. Thus, the seat can be stably and rotatably supported by the vehicle body.

The straddled vehicle may be configured so that the pin and the outer cylindrical member rotate relative to each other, thereby allowing the seat to rotate relative to the vehicle body with the pin serving as an axis of rotation.

The damper may be made of a rubber having a hardness of 30 to 60 degrees.

Therefore, it is possible to desirably suppress the vibration transmitted from the vehicle body to the seat, and the seat can be stably supported by the vehicle body.

The inner diameter of the damper may be 7 to 12 mm. The outer diameter of the damper may be 15 to 24 mm.

The damper may have an inner circumferential surface; and a plurality of grooves extending in the left-right direction may be formed on the inner circumferential surface.

Thus, since the vibration absorbing performance of the damper is improved, vibration transmitted from the vehicle body to the seat can be more effectively suppressed.

According to the present invention, it is possible to provide a straddled vehicle having a seat rotatably linked to a vehicle body by a hinge, and being capable of suppressing vibration in the up-down direction and the front-rear direction transmitted from the vehicle body to the seat.

### Brief description of the drawings

FIG. 1 is a left side view of a motorcycle according to one embodiment.
FIG. 2 is a side view of a hinge and a surrounding structure when the seat is in the horizontal position.
FIG. 3 is a side view of the hinge and the surrounding structure when the seat is in the vertical position.
FIG. 4 is a front view of the hinge and the surrounding structure.
FIG. 5 is a side view of the hinge.
FIG. 6 is a cross-sectional view of the hinge taken along line VI-VI of FIG. 4.
FIG. 7 is a cross-sectional view of the hinge taken along line VII-VII of FIG. 5.
FIG. 8 is a perspective view of a first damper.
FIG. 9 is a lateral cross-sectional view of a damper, etc., according to another embodiment.
FIG. 10 is a lateral cross-sectional view of a damper according to another embodiment.
FIG. 11 is a lateral cross-sectional view of a damper according to another embodiment.

### Embodiments of the invention

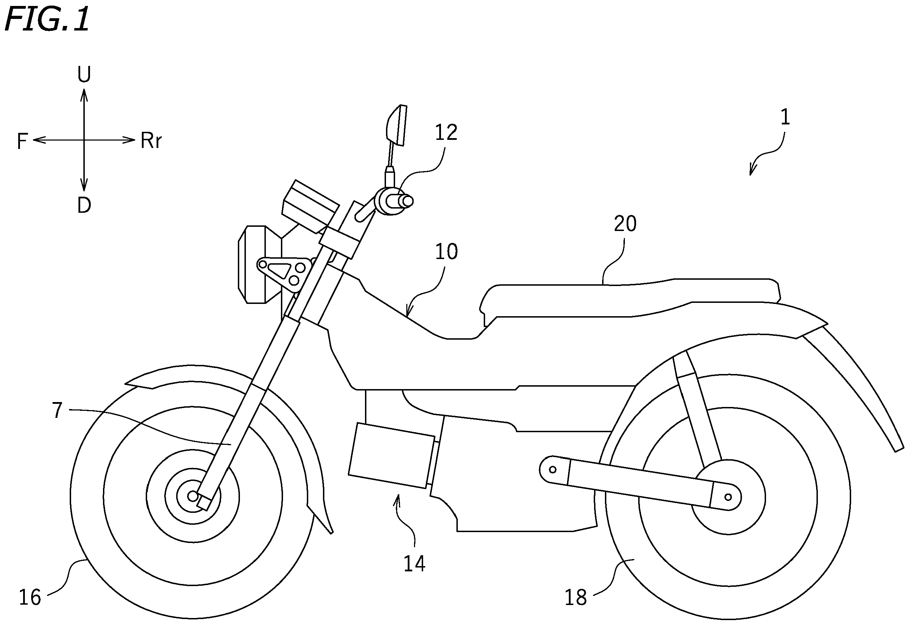

An embodiment of a straddled vehicle will now be described with reference to the drawings. FIG. 1 is a side view of a motorcycle 1, which is an example of a straddled vehicle.

The terms front, rear, left, right, up and down, as used in the description below, refer to these directions as seen from a virtual rider seated on a seat 20 while the motorcycle 1 is standing upright on a horizontal surface with no rider and no load thereon, unless specified otherwise. The designations F, Rr, L, R, U and D, as used in the figures, refer to front, rear, left, right, up and down, respectively.

The motorcycle 1 includes a vehicle body 10, an internal combustion engine (hereinafter referred to as "engine") 14 as a driving source for traveling, a front wheel 16, a rear wheel 18, a steering handle 12, and a seat 20 supported on the vehicle body 10.

The vehicle body 10 is supported on the front wheel 16 and the rear wheel 18. The steering handle 12 is connected to the front wheel 16 via a steering shaft (not shown) and a front fork 7. By turning the steering handle 12 left and right, the direction of the front wheel 16 can be changed to left and right. The engine 14 is supported on the vehicle body 10. The rear wheel 18 is linked to the engine 14 so that power can be transmitted therebetween. The rear wheel 18 is the drive wheel and is driven by the driving force of the engine 14.

The seat 20 is arranged rearward of the steering handle 12. The seat 20 is arranged upward of the engine 14.

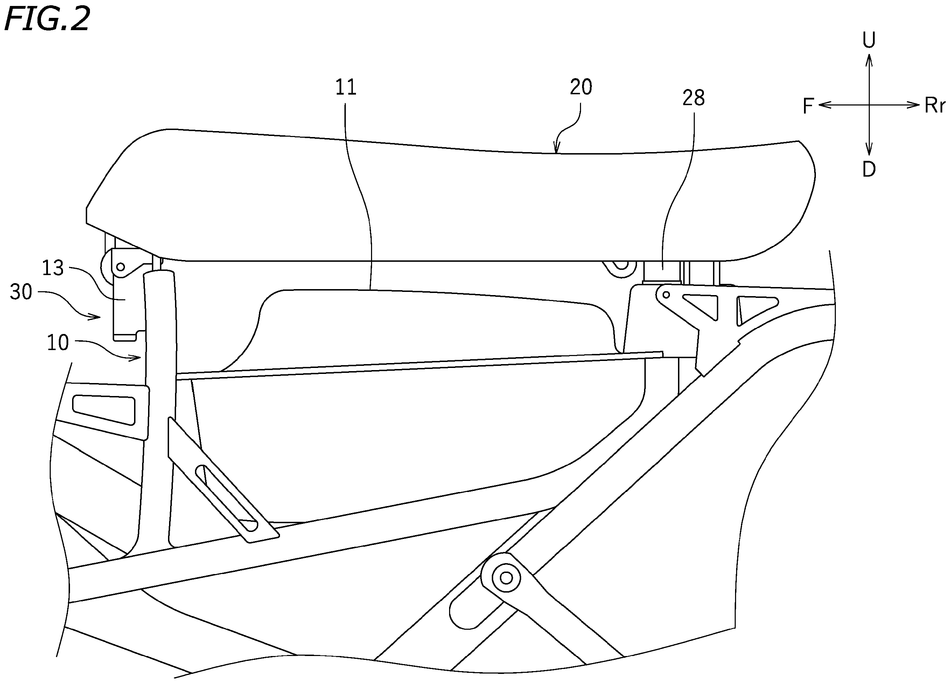

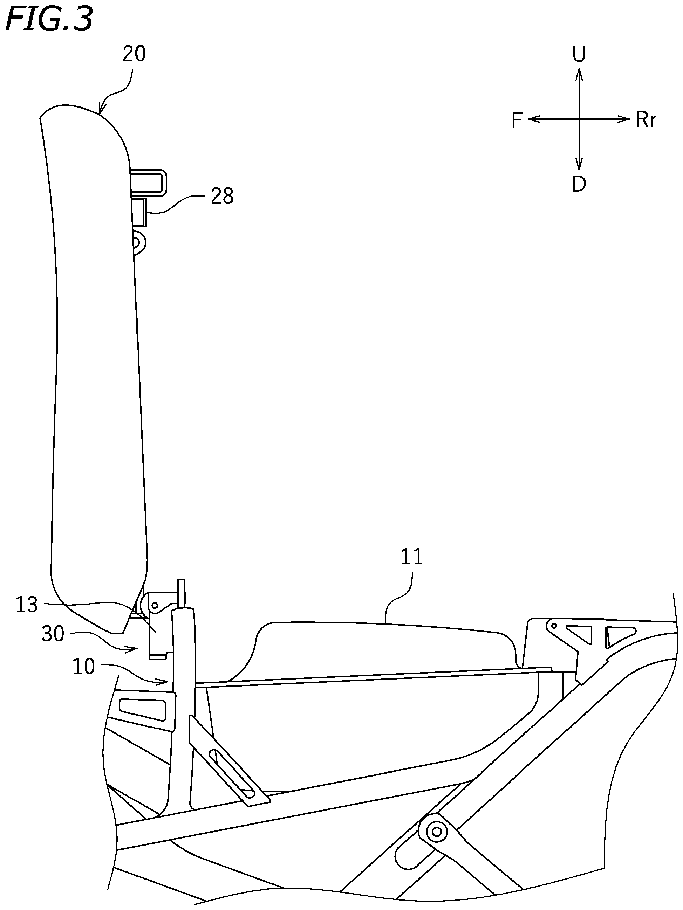

As shown in FIG. 2 and FIG. 3, the motorcycle 1 includes a hinge 30 that links together the seat 20 and the vehicle body 10. The seat 20 is linked by the hinge 30 so that the seat 20 can be turned up and down relative to the vehicle body 10. The hinge 30 is located at the front end portion of the seat 20. In the present embodiment, a fuel tank 11 is arranged downward of the seat 20. The seat 20 is configured so that the seat 20 can be repositioned by the hinge 30 to the horizontal position (see FIG. 2), in which the rider is seated and to the vertical position (see FIG. 3) in which there is an opening upward of the fuel tank 11.

As shown in FIG. 2, the front end portion of the seat 20 is supported on the vehicle body 10 via the hinge 30. A supported portion 28, which is supported on the vehicle body 10, is provided at the rear portion of the seat 20. Note that the front portion and the rear portion of the seat 20 refer to portions that are respectively forward and rearward of the middle position of the seat 20 in the front-rear direction. In the present embodiment, the front portion and the rear portion of the seat 20 are supported on the vehicle body 10.

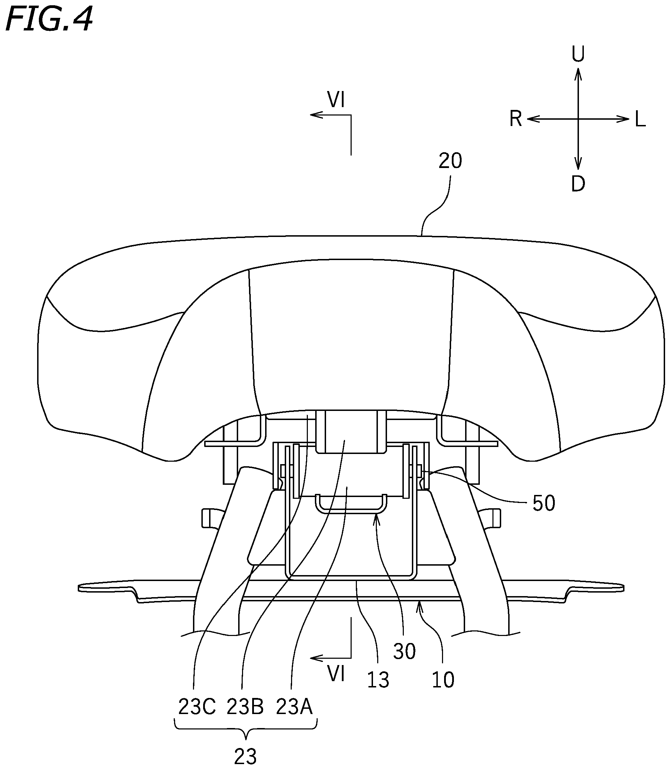

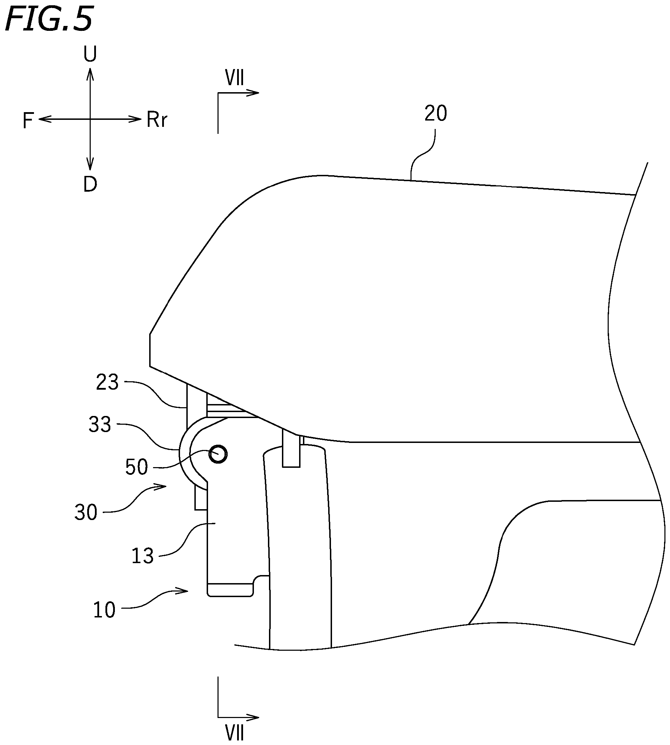

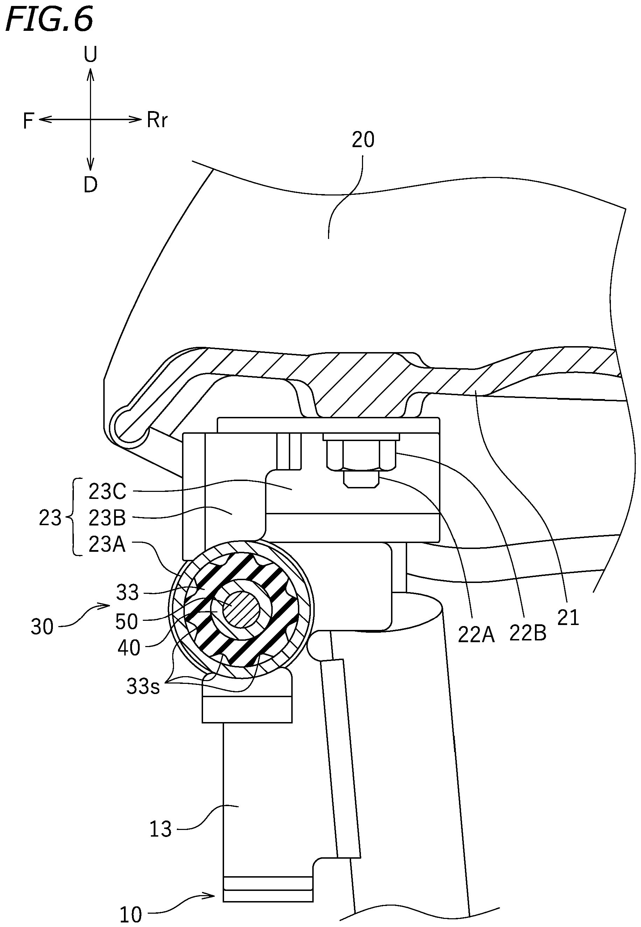

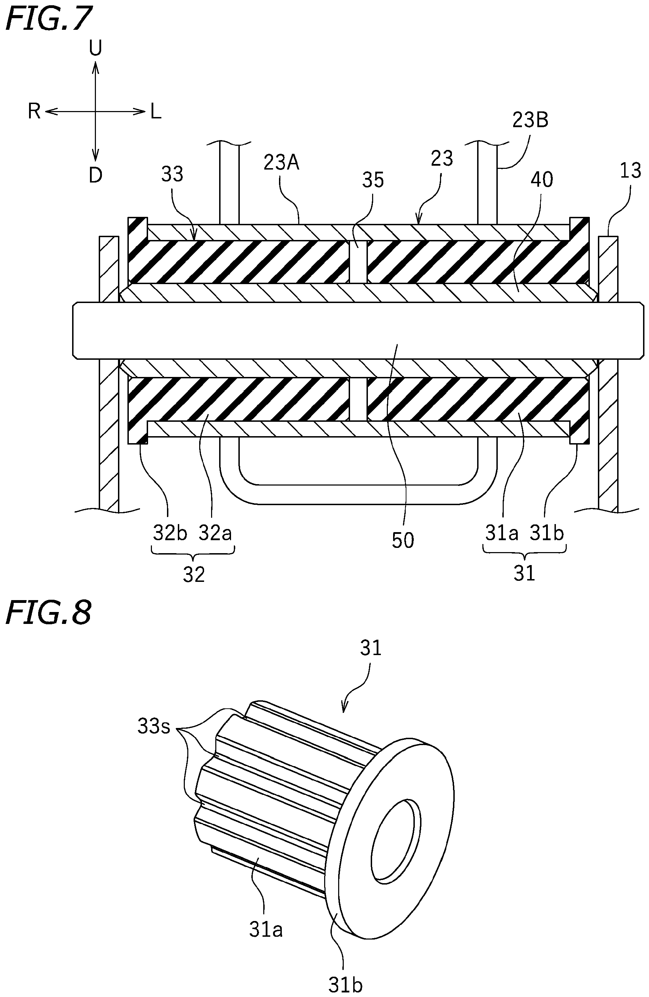

Next, details of the hinge 30 will be described. FIG. 4 is a front view of the hinge 30 and the surrounding structure. FIG. 5 is a side view of the hinge 30. FIG. 6 is a cross-sectional view of the hinge 30 taken along line VI-VI of FIG. 4. FIG. 7 is a cross-sectional view of the hinge 30 taken along line VII-VII of FIG. 5.

As shown in FIG. 6, a link member 23 is fixed to a bottom plate 21 of the seat 20 by a bolt 22A and a nut 22B. The link member 23 includes an outer cylindrical member 23A having a cylindrical shape, an arm member 23B, and a fastening member 23C. As shown in FIG. 4, the center axis of the outer cylindrical member 23A extends in the left-right direction. When the seat 20 is in the horizontal position, the arm member 23B extends upward from the outer cylindrical member 23A. The fastening member 23C has a hole (not shown) through which the bolt 22A is inserted. Here, the outer cylindrical member 23A, the arm member 23B and the fastening member 23C are a single-piece part. The link member 23 is made of a metal such as iron, stainless steel or aluminum. Note however that the outer cylindrical member 23A, the arm member 23B and the fastening member 23C may be separate from each other. There is no particular limitation on the material of the link member 23.

As shown in FIG. 7, a damper 33 having a cylindrical shape made of an elastic material is inserted inside the outer cylindrical member 23A. The damper 33 extends through the inside of the outer cylindrical member 23A. The center axis of the damper 33 extends in the left-right direction. While the damper 33 may be a single-piece part, the damper 33 is composed of two dampers having a cylindrical shape, i.e., a first damper 31 and a second damper 32, in the present embodiment. FIG. 8 is a perspective view of the first damper 31.

The first damper 31 includes a first cylindrical portion 31a and a first flange portion 31b extending outward in the radial direction from the left end of the first cylindrical portion 31a. The outer diameter of the first flange portion 31b is larger than the outer diameter of the first cylindrical portion 31a. A plurality of grooves 33s extending in the axial direction of the first cylindrical portion 31a are formed on the outer circumferential surface of the first cylindrical portion 31a. In the present embodiment, since the axial direction of the first damper 31 coincides with the left-right direction, the grooves 33s extend in the left-right direction. In the present embodiment, the grooves 33s are formed to have a semicircular cross-sectional shape (see FIG. 6). However, there is no particular limitation on the cross-sectional shape of the grooves 33s, and it may be a triangular shape or a rectangular shape, for example. In the present embodiment, the grooves 33s all have the same shape, but the shape of any one groove 33s may be different from the shape of any other groove 33s. While there is no particular limitation on the number of grooves 33s, it is 6 to 10, for example. In the present embodiment, eight grooves 33s are formed on the first cylindrical portion 31a. The eight grooves 33s are arranged evenly in the circumferential direction of the outer circumferential surface of the first cylindrical portion 31a. The grooves 33s are arranged every 45 degrees around the axis of the first cylindrical section 31a.

There is no particular limitation on the material of the damper 33 as long as the damper 33 is an elastic material capable of absorbing vibration. In the present embodiment, the first damper 31 is made of rubber with a hardness of 30 to 60 degrees. There is no particular limitation on the dimension of the damper 33. The inner diameter of the damper 33 is 7 to 12 mm, for example, and the outer diameter of damper 33 is 15 to 24 mm, for example. Note that the outer diameter of the damper 33 refers to the outer diameter excluding the flange portion. Here, the inner diameter of the first cylindrical portion 31a is 7 to 12 mm, for example, and the outer diameter of the first cylindrical portion 31a is 15 to 24 mm, for example.

The shape, the material or the dimensions of the first damper 31 and the second damper 32 may be different from each other, but they are identical in the present embodiment. Therefore, a detailed description of the second damper 32 will be omitted. As shown in FIG. 7, the first damper 31 and the second damper 32 are arranged in left-right symmetry. The first damper 31 is inserted into the left portion of the outer cylindrical member 23A, and the second damper 32 is inserted into the right portion of the outer cylindrical member 23A. The second damper 32 is arranged rightward of the first damper 31. The second damper 32 includes a second cylindrical portion 32a, and a second flange portion 32b extending outward in the radial direction from the right end of the second cylindrical portion 32a. A plurality of grooves 33s extending in the left-right direction are formed on the outer circumference surface of the second cylindrical portion 32a. Eight grooves 33s are arranged evenly in the circumferential direction on the outer circumferential surface of the second cylindrical portion 32a (see FIG. 6).

As shown in FIG. 7, the first damper 31 is inserted into the outer cylindrical member 23A from the left side and the second damper 32 is inserted into the outer cylindrical member 23A from the right side. The first flange portion 31b of the first damper 31 contacts the left end of the outer cylindrical member 23A, thereby positioning the first damper 31 relative to the outer cylindrical member 23A. Similarly, the second flange portion 32b of the second damper 32 contacts the right end of the outer cylindrical member 23A, thereby positioning the second damper 32 relative to the outer cylindrical member 23A. Where the first flange portion 31b contacts the left end of the outer cylindrical member 23A and the second flange portion 32b contacts the right end of the outer cylindrical member 23A, the first damper 31 and the second damper 32 are separated from each other, forming a gap 35 between the first damper 31 and the second damper 32.

As shown in FIG. 7, an inner cylindrical member 40 having a cylindrical shape is inserted inside the damper 33. The inner cylindrical member 40 extends in the left-right direction. The inner cylindrical member 40 is arranged inside the outer cylindrical member 23A, and the damper 33 is interposed between the outer cylindrical member 23A and the inner cylindrical member 40. While there is no particular limitation on the material of the inner cylindrical member 40, it is made of a metal such as iron, stainless steel or aluminum in the present embodiment.

A pin 50 extending in the left-right direction is inserted inside the inner cylindrical member 40. The pin 50 extends through the inside of the inner cylindrical member 40. Since the inner cylindrical member 40 is arranged inside the outer cylindrical member 23A, the pin 50 extends through the inside of the outer cylindrical member 23A. Since the inner cylindrical member 40 is inserted into the damper 33, the pin 50 is arranged inside the damper 33. The pin 50 is inserted into the damper 33. The pin 50 extends through the inside of the damper 33. While the pin 50 may have a cylindrical shape, it is formed in a columnar shape in the present embodiment. While there is no particular limitation on the material of the pin 50, it is made of a metal such as iron, stainless steel or aluminum in the present embodiment.

As shown in FIG. 5, the vehicle body 10 includes a support bracket 13. As shown in FIG. 7, the pin 50 is fitted into the support bracket 13, and is fixed to the support bracket 13. The pin 50 rotatably supports the inner cylindrical member 40. The inner cylindrical member 40, the damper 33 and the outer cylindrical member 23A, together as a single piece, can rotate relative to the pin 50. The pin 50 rotatably supports the inner cylindrical member 40, the damper 33 and the outer cylindrical member 23A. The outer cylindrical member 23A is rotatable relative to the pin 50.

The motorcycle 1 is configured such that the pin 50 and the outer cylindrical member 23A can rotate relative to each other, thereby allowing the seat 20 to rotate relative to the vehicle body 10 with the pin 50 serving as the axis of rotation. In the present embodiment, the outer cylindrical member 23A of the link member 23 fixed to the seat 20 rotates relative to the pin 50 fixed to the support bracket 13 of the vehicle body 10. This causes the seat 20 to rotate up and down between the horizontal position (see FIG. 2) and the vertical position (see FIG. 3).

As described above, with the motorcycle 1 according to the present embodiment, the damper 33 having a cylindrical shape is arranged between the pin 50 fixed to the vehicle body 10 and the outer cylindrical member 23A fixed to the seat 20. Since the pin 50 is inserted in the damper 33, the damper 33 covers the periphery of the pin 50. Since the damper 33 is inserted in the outer cylindrical member 23A, the outer cylindrical member 23A covers the periphery of the damper 33. A part of the damper 33 is sandwiched between the pin 50 and the outer cylindrical member 23A from above and below, and another part of the damper 33 is sandwiched between the pin 50 and the outer cylindrical member 23A from front and back. Thus, vibration in the up-down direction and vibration in the front-rear direction transmitted from the vehicle body 10 to the seat 20 are both suppressed by the damper 33. With the motorcycle 1 according to the present embodiment, vibration in the up-down direction and vibration in the front-rear direction transmitted from the vehicle body 10 to the seat 20 can be suppressed.

According to the present embodiment, a plurality of grooves 33s extending in the left-right direction are formed on the outer circumferential surface of the damper 33 (see FIG. 8). This makes it easier for the damper 33 to deform when inserting the damper 33 into the outer cylindrical member 23A. The damper 33 can be inserted into the outer cylindrical member 23A relatively easily, thereby facilitating the assembly of the hinge 30. Since the vibration absorbing performance of the damper 33 is improved, vibration transmitted from the vehicle body 10 to the seat 20 can be more effectively suppressed.

In the present embodiment, the number of grooves 33s is 6 to 10. The grooves 33s are arranged evenly in the circumferential direction on the outer circumferential surface of the damper 33. This makes it easier for the damper 33 to deform, thereby facilitating the operation of inserting the damper 33 into the outer cylindrical member 23A. It is possible to effectively suppress vibration transmitted from the vehicle body 10 to the seat 20.

According to the present embodiment, the damper 33 includes the first damper 31 and the second damper 32 (see FIG. 7). By inserting the first damper 31 from the left side of the outer cylindrical member 23A and inserting the second damper 32 from the right side of the outer cylindrical member 23A, the damper 33 can be easily inserted inside the outer cylindrical member 23A. This further facilitates the assembly of the hinge 30.

According to the present embodiment, the gap 35 is provided between the first damper 31 and the second damper 32. Even if there is a dimension error, for the left-right direction, in the outer cylindrical member 23A, the first damper 31 or the second damper 32, it is possible to easily arrange the first damper 31 and the second damper 32 inside the outer cylindrical member 23A. For example, even if the length of the first damper 31 in the left-right direction is slightly longer than the design value, it will only result in the gap 35 being smaller, and it is possible to easily arrange the first and second dampers 31 and 32 inside the outer cylindrical member 23A. This facilitates the assembly of the hinge 30.

According to the present embodiment, the first damper 31 includes the first cylindrical portion 31a and the first flange portion 31b, and the second damper 32 includes the second cylindrical portion 32a and the second flange portion 32b. The first damper 31 can be positioned by inserting the first damper 31 from the left side of the outer cylindrical member 23A and placing the first flange portion 31b against the left end of the outer cylindrical member 23A. Similarly, the second damper 32 can be positioned by inserting the second damper 32 from the right side of the outer cylindrical member 23A and placing the second flange portion 32b against the right end of the outer cylindrical member 23A. This further facilitates the assembly of the hinge 30.

According to the invention, the hinge 30 includes the inner cylindrical member 40 inserted into the damper 33 and into which the pin 50 is inserted. The pin 50 rotatably supports the inner cylindrical member 40. Thus, with the inner cylindrical member 40 interposed between the damper 33 and the pin 50, the outer cylindrical member 23A can be stably and rotatably supported by the pin 50. Thus, the seat 20 can be stably and rotatably supported by the vehicle body 10.

According to the present embodiment, the damper 33 is made of a rubber having a hardness of 30 to 60 degrees. The damper 33 has an appropriate hardness. Therefore, it is possible to desirably suppress the vibration transmitted from the vehicle body 10 to the seat 20, and the seat 20 can be stably supported by the vehicle body 10.

Although one embodiment of the straddled vehicle has been described above, the embodiment described above is merely an example, and various other embodiments are possible. Examples of other embodiments will be briefly described below.

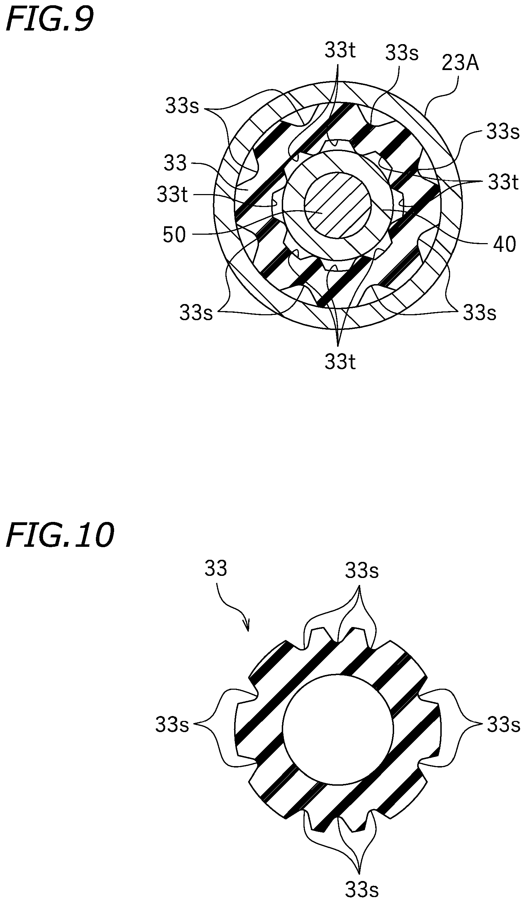

In the embodiment described above, the inner circumferential surface of the damper 33 (the first damper 31 and the second damper 32) is a smooth surface, but as shown in FIG. 9, a groove 33t extending in the left-right direction may be formed on the inner circumferential surface of the damper 33. This can further improve the vibration absorbing performance of the damper 33. Thus, the vibration transmitted from the vehicle body 10 to the seat 20 can be effectively suppressed.

In the embodiment described above, the outer cylindrical member 23A of the hinge 30 is fixed to the seat 20 and the pin 50 is fixed to the vehicle body 10. However, the outer cylindrical member 23A may be fixed to the vehicle body 10 and the pin 50 may be fixed to the seat 20. In this case, the pin 50 rotates relative to the outer cylindrical member 23A, causing the seat 20 to rotate up and down between the horizontal position and the vertical position.

In the embodiment described above, the hinge 30 is connected to the front end of the seat 20, and the seat 20 is configured to rotate forward and upward while moving from the horizontal position to the vertical position. However, the location of the hinge 30 is not limited to the front end portion of the seat 20. For example, the hinge 30 may be connected to the rear end portion of the seat 20 and the seat 20 may be configured to rotate rearward and upward while moving from the horizontal position to the vertical position.

In the embodiment described above, a plurality of grooves 33s are formed evenly in the circumferential direction on the outer circumferential surface of the damper 33. Note however that the grooves 33s do not need to be formed evenly in the circumferential direction.

As shown in FIG. 10, the number of grooves in the upper portion or the lower portion of the outer circumferential surface of the damper 33 may be greater than the number of grooves in the front portion or the rear portion. This makes the vibration absorbing capacity of the damper 33 in the front-rear direction greater than the vibration absorbing capacity in the up-down direction. Thus, the vibration transmitted to the seat 20 can be effectively suppressed in motorcycles where the vibration in the front-rear direction is greater than the vibration in the up-down direction. Note that the upper portion of the outer circumferential surface of the damper 33 is the portion of the damper 33 that is less than 45 degrees forward and rearward of the vertical line extending upward from the axis of the damper 33. The lower portion of the outer circumferential surface of the damper 33 is the portion of the damper 33 that is less than 45 degrees forward and rearward of the vertical line extending downward from the axis of the damper 33. The front portion of the outer circumferential surface of the damper 33 is the portion of the damper 33 that is less than 45 degrees upward and downward of the horizontal line extending forward from the axis of the damper 33. The rear portion of the outer circumferential surface of the damper 33 is the portion of the damper 33 that is less than 45 degrees upward and downward of the horizontal line extending backward from the axis of the damper 33.

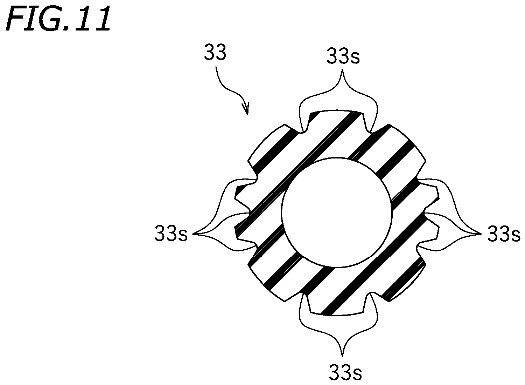

As shown in FIG. 11, the number of grooves on the front portion or the rear portion of the outer circumferential surface of the damper 33 may be greater than the number of grooves on the upper portion or the lower portion. This makes the vibration absorbing capacity of the damper 33 in the up-down direction greater than the vibration absorbing capacity in the front-rear direction. Thus, the vibration transmitted to the seat 20 can be effectively suppressed in motorcycles where the vibration in the up-down direction is greater than the vibration in the front-rear direction.

The average groove width of the grooves in the upper portion or the lower portion of the outer circumferential surface of the damper 33 may be larger than the average groove width of the grooves in the front portion or the rear portion. This makes the vibration absorbing capacity of the damper 33 in the front-rear direction greater than the vibration absorbing capacity in the up-down direction. Thus, the vibration transmitted to the seat 20 can be effectively suppressed in motorcycles where the vibration in the front-rear direction is greater than the vibration in the up-down direction.

The average groove width of the grooves in the front portion or the rear portion of the outer circumferential surface of the damper 33 may be larger than the average groove width of the grooves in the upper portion or the lower portion. Thus, the vibration absorbing capacity of the damper 33 in the up-down direction is greater than the vibration absorbing capacity in the front-rear direction. Thus, the vibration transmitted to the seat 20 can be effectively suppressed in motorcycles where the vibration in the up-down direction is greater than the vibration in the front-rear direction.

The average groove depth of the grooves in the upper portion or the lower portion of the outer circumferential surface of the damper 33 may be greater than the average groove depth of the grooves in the front portion or the rear portion. Thus, the vibration absorbing capacity of the damper 33 in the front-rear direction is greater than the vibration absorbing capacity in the up-down direction. Thus, the vibration transmitted to the seat 20 can be effectively suppressed in motorcycles 1 where the vibration in the front-rear direction is greater than the vibration in the up-down direction.

The average groove depth of the grooves in the front portion or the rear portion of the outer circumferential surface of the damper 33 may be greater than the average groove depth of the grooves in the upper portion or the lower portion. Thus, the vibration absorbing capacity of the damper 33 in the up-down direction is greater than the vibration absorbing capacity in the front-rear direction. Thus, the vibration transmitted to the seat 20 can be effectively suppressed in motorcycles 1 where the vibration in the up-down direction is greater than the vibration in the front-rear direction.

While a plurality of grooves 33s are formed on the outer circumferential surface of the damper 33 in the embodiment described above, the number of grooves 33s may be one. There may be no grooves 33s on the outer circumferential surface of the damper 33.

While the damper 33 includes the first damper 31 and the second damper 32 in the embodiment described above, the damper 33 may include three or more dampers. The damper 33 may be a single damper.

While the gap 35 is provided between the first damper 31 and the second damper 32 in the embodiment described above, the gap 35 may be absent.

While the first damper 31 includes the first flange portion 31b and the second damper 32 includes the second flange portion 32b in the embodiment described above, the first flange portion 31b and/or the second flange portion 32b may be absent. The damper 33 may be arranged entirely on the inner side of the outer cylindrical member 23A, or a portion thereof may be arranged on the outer side of the outer cylindrical member 23A.

While the inner cylindrical member 40 is provided between the damper 33 and the pin 50 in the embodiment described above, the inner cylindrical member 40 may be absent as long as the damper 33 and the pin 50 can easily rotate relative to each other.

While the fuel tank 11 is arranged downward of the seat 20 in the embodiment described above, the vehicle parts downward of the seat 20 are not limited to the fuel tank 11. For example, a storage box may be arranged downward of the seat 20. In this case, the upward of the storage box can be opened so that items can be placed in and out of the storage box by rotating the seat 20 from the horizontal position to the vertical position.

A straddled vehicle refers to a vehicle that is straddled by a rider. The straddled vehicle is not limited to the motorcycle 1. The straddled vehicle may be an auto tricycle, an ATV (All Terrain Vehicle), or a snowmobile, for example.

### Reference Signs List

1: Motorcycle (straddled vehicle), 10: Vehicle body, 20: Seat, 23A: Outer cylindrical member, 30: Hinge, 31: First damper, 31a: First cylindrical portion, 31b: First flange portion, 32: Second damper, 32a: Second cylindrical portion, 32b: Second flange portion, 33: Damper, 33s: Groove, 33t: Groove, 35: Gap, 40: Inner cylindrical member, 50: Pin

## Claims

1. A straddled vehicle (1) comprising:
a vehicle body (10);
a seat (20) supported on the vehicle body (10); and
a hinge (30) that links together the seat (20) and the vehicle body (10), wherein:
the hinge (30) including:
a pin (50) that is fixed to one of the vehicle body (10) and the seat (20) and is extending in a left-right direction;
an outer cylindrical member (23A) having a cylindrical shape that is fixed to the other one of the vehicle body (10) and the seat (20), into which the pin (50) is inserted, and that is capable of rotating relative to the pin (50); and
a damper (33) having a cylindrical shape made of an elastic member that is inserted into the outer cylindrical member (23A) and into which the pin (50) is inserted;
**characterized by** comprising an inner cylindrical member (40) that is inserted into the damper (33) and into which the pin (50) is inserted; and
in that one of the pin (50) and the inner cylindrical member (40) rotatably supports the other one of the pin (50) and the inner cylindrical member (40).

2. The straddled vehicle according to claim 1, wherein a center axis of the outer cylindrical member (23A) extends in the left-right direction.

3. The straddled vehicle according to claim 1 or 2, wherein the pin (50) extends through inside of the outer cylindrical member (23A).

4. The straddled vehicle according to any one of claims 1 to 3, wherein a center axis of the damper (33) extends in the left-right direction.

5. The straddled vehicle according to any one of claims 1 to 4, wherein:
the damper (33) extends through inside of the outer cylindrical member (23A); and
the pin (50) extends through inside of the damper (33).

6. The straddled vehicle according to claim 1, wherein:
the damper (33) has an outer circumferential surface; and
a plurality of grooves (33s) extending in the left-right direction are formed on the outer circumferential surface.

7. The straddled vehicle according to claim 6, wherein the number of grooves (33s) is 6 to 10.

8. The straddled vehicle according to claim 6 or 7, wherein the grooves (33s) are arranged evenly in a circumferential direction on the outer circumferential surface.

9. The straddled vehicle according to any one of claims 1 to 8, wherein the damper (33) includes a first damper (31) having a cylindrical shape and a second damper (32) having a cylindrical shape that is arranged rightward of first damper (31).

10. The straddled vehicle according to claim 9, wherein a gap (35) is provided between the first damper (31) and the second damper (32).

11. The straddled vehicle according to claim 9 or 10, wherein:
the first damper (31) includes a first cylindrical portion (31a) and a first flange portion (31b) that extends outward in a radial direction from a left end of the first cylindrical portion (31a); and
the second damper (32) includes a second cylindrical portion (32a) and a second flange portion (32b) that extends outward in a radial direction from a right end of the second cylindrical portion (32a).

12. The straddled vehicle according to any one of claims 1 to 11, wherein the pin (50) and the outer cylindrical member (23A) rotate relative to each other, thereby allowing the seat (20) to rotate relative to the vehicle body (10) with the pin (50) serving as an axis of rotation.

13. The straddled vehicle according to any one of claims 1 to 12, wherein the damper (33) is made of a rubber having a hardness of 30 to 60 degrees.

14. The straddled vehicle according to any one of claims 1 to 13, wherein:
an inner diameter of the damper (33) is 7 to 12 mm; and
an outer diameter of the damper (33) is 15 to 24 mm.

15. The straddled vehicle according to any one of claims 1 to 14, wherein:
the damper (33) has an inner circumferential surface; and
a plurality of grooves (33t) extending in the left-right direction are formed on the inner circumferential surface.

## Patentansprüche

1. Grätschsitzfahrzeug (1), umfassend:
eine Fahrzeugkarosserie (10),
einen Sitz (20), der an der Fahrzeugkarosserie (10) gehalten wird, und
ein Gelenk (30), das den Sitz (20) und die Fahrzeugkarosserie (10) miteinander verbindet,
wobei das Gelenk (30) umfasst:
einen Stift (50), der an der Fahrzeugkarosserie (10) oder dem Sitz (20) fixiert ist und sich in einer Links-Rechts-Richtung erstreckt,
ein äußeres zylindrisches Glied (23A), das an dem anderen der Fahrzeugkarosserie (10) und des Sitzes (20) fixiert ist, in das der Stift (50) eingesteckt ist und das sich relativ zu dem Stift (50) drehen kann, und
einen zylindrischen Dämpfer (33), der aus einem elastischen Glied ausgebildet ist, in das äußere zylindrische Glied (23A) eingesteckt ist und in den der Stift (50) eingesteckt ist,
**gekennzeichnet durch** ein inneres zylindrisches Glied (40), das in den Dämpfer (33) eingesteckt ist und in das der Stift (50) eingesteckt ist,
wobei der Stift (50) oder das innere zylindrische Glied (40) drehbar das andere des Stifts (50) und des inneren zylindrischen Glieds (40) hält.

2. Grätschsitzfahrzeug nach Anspruch 1, wobei sich die Mittenachse des äußeren zylindrischen Glieds (23A) in der Links-Rechts-Richtung erstreckt.

3. Grätschsitzfahrzeug nach Anspruch 1 oder 2, wobei sich der Stift (50) durch das Innere des äußeren zylindrischen Glieds (23A) erstreckt.

4. Grätschsitzfahrzeug nach einem der Ansprüche 1 bis 3, wobei sich die Mittenachse des Dämpfers (33) in der Links-Rechts-Richtung erstreckt.

5. Grätschsitzfahrzeug nach einem der Ansprüche 1 bis 4, wobei:
sich der Dämpfer (33) durch das Innere des äußeren zylindrischen Glieds (23A) erstreckt, und
sich der Stift (50) durch das Innere des Dämpfers (33) erstreckt.

6. Grätschsitzfahrzeug nach Anspruch 1, wobei:
der Dämpfer (33) eine Außenumfangsfläche aufweist, und
eine Vielzahl von sich in der Links-Rechts-Richtung erstreckenden Nuten (33s) an der Außenumfangsfläche ausgebildet sind.

7. Grätschsitzfahrzeug nach Anspruch 6, wobei die Anzahl von Nuten (33s) zwischen 6 und 10 beträgt.

8. Grätschsitzfahrzeug nach Anspruch 6 oder 7, wobei die Nuten (33s) gleichmäßig in einer Umfangsrichtung an der Außenumfangsfläche angeordnet sind.

9. Grätschsitzfahrzeug nach einem der Ansprüche 1 bis 8, wobei der Dämpfer (33) einen ersten Dämpfer (31) mit einer zylindrischen Form und einen zweiten Dämpfer (32) mit einer zylindrischen Form, der rechts von dem ersten Dämpfer (31) angeordnet ist, umfasst.

10. Grätschsitzfahrzeug nach Anspruch 9, wobei ein Zwischenraum (35) zwischen dem ersten Dämpfer (31) und dem zweiten Dämpfer (32) vorgesehen ist.

11. Grätschsitzfahrzeug nach Anspruch 9 oder 10, wobei:
der erste Dämpfer (31) einen ersten zylindrischen Teil (31a) und einen ersten Flanschteil 31b), der sich von einem linken Ende des ersten zylindrischen Teils (31a) in einer radialen Richtung nach außen erstreckt, umfasst, und
der zweite Dämpfer (32) einen zweiten zylindrischen Teil (32a) und einen zweiten Flanschteil (32b), der sich von einem rechten Ende des zweiten zylindrischen Teils (32a) in einer radialen Richtung nach außen erstreckt, umfasst.

12. Grätschsitzfahrzeug nach einem der Ansprüche 1 bis 11, wobei sich der Stift (50) und das äußere zylindrische Glied (23A) relativ zueinander drehen, um eine Drehung des Sitzes (20) relativ zu der Fahrzeugkarosserie (10) mit dem Stift (50) als einer Drehachse zu erlauben.

13. Grätschsitzfahrzeug nach einem der Ansprüche 1 bis 12, wobei der Dämpfer (33) aus einem Gummi mit einer Härte von 30 bis 60 Grad ausgebildet ist.

14. Grätschsitzfahrzeug nach einem der Ansprüche 1 bis 13, wobei:
der Innendurchmesser des Dämpfers (33) zwischen 7 und 12 mm beträgt, und
der Außendurchmesser des Dämpfers (33) zwischen 15 und 24 mm beträgt.

15. Grätschsitzfahrzeug nach einem der Ansprüche 1 bis 14, wobei:
der Dämpfer (33) eine Innenumfangsfläche aufweist, und
eine Vielzahl von sich in der Links-Rechts-Richtung erstreckenden Nuten (33t) an der Innenumfangsfläche ausgebildet sind.

## Revendications

1. Véhicule à selle (1) comprenant :
une carrosserie (10) ;
un siège (20) supporté sur la carrosserie (10) ; et
une charnière (30) qui relie le siège (20) et la carrosserie (10),
dans lequel :
la charnière (30) comprenant :
une goupille (50) qui est fixée à l'un de la carrosserie (10) et du siège (20) et qui s'étend dans une direction gauche-droite ;
un élément cylindrique extérieur (23A) ayant une forme cylindrique qui est fixé à l'autre de la carrosserie (10) et du siège (20), dans lequel est insérée la goupille (50), et qui est capable de tourner par rapport à la goupille (50) ; et
un amortisseur (33) ayant une forme cylindrique constitué d'un élément élastique qui est inséré dans l'élément cylindrique extérieur (23A) et dans lequel est insérée la goupille (50) ;
**caractérisé en ce qu'**il comprend un élément cylindrique intérieur (40) qui est inséré dans l'amortisseur (33) et dans lequel est insérée la goupille (50) ; et
**en ce que** l'un de la goupille (50) et de l'élément cylindrique intérieur (40) supporte en rotation l'autre de la goupille (50) et de l'élément cylindrique intérieur (40).

2. Véhicule à selle selon la revendication 1, dans lequel un axe central de l'élément cylindrique extérieur (23A) s'étend dans la direction gauche-droite.

3. Véhicule à selle selon la revendication 1 ou 2, dans lequel la goupille (50) s'étend à travers l'intérieur de l'élément cylindrique extérieur (23A).

4. Véhicule à selle selon l'une quelconque des revendications 1 à 3, dans lequel un axe central de l'amortisseur (33) s'étend dans la direction gauche-droite.

5. Véhicule à selle selon l'une quelconque des revendications 1 à 4, dans lequel :
l'amortisseur (33) s'étend à travers l'intérieur de l'élément cylindrique extérieur (23A) ; et
la goupille (50) s'étend à travers l'intérieur de l'amortisseur (33).

6. Véhicule à selle selon la revendication 1, dans lequel :
l'amortisseur (33) a une surface circonférentielle extérieure ; et
une pluralité de rainures (33) s'étendant dans la direction gauche-droite sont formées sur la surface circonférentielle extérieure.

7. Véhicule à selle selon la revendication 6, dans lequel le nombre de rainures (33s) est de 6 à 10.

8. Véhicule à selle selon la revendication 6 ou 7, dans lequel les rainures (33s) sont agencées uniformément dans une direction circonférentielle sur la surface circonférentielle extérieure.

9. Véhicule à selle selon l'une quelconque des revendications 1 à 8, dans lequel l'amortisseur (33) comprend un premier amortisseur (31) ayant une forme cylindrique et un second amortisseur (32) ayant une forme cylindrique qui est agencé à droite du premier amortisseur (31).

10. Véhicule à selle selon la revendication 9, dans lequel un espace (35) est prévu entre le premier amortisseur (31) et le second amortisseur (32).

11. Véhicule à selle selon la revendication 9 ou 10, dans lequel :
le premier amortisseur (31) comprend une première partie cylindrique (31a) et une première partie de bride (31b) qui s'étend vers l'extérieur dans une direction radiale à partir d'une extrémité gauche de la première partie cylindrique (31a) ; et
le second amortisseur (32) comprend une seconde partie cylindrique (32a) et une seconde partie de bride (32b) qui s'étend vers l'extérieur dans une direction radiale à partir d'une extrémité droite de la seconde partie cylindrique (32a).

12. Véhicule à selle selon l'une quelconque des revendications 1 à 11, dans lequel la goupille (50) et l'élément cylindrique extérieur (23A) tournent l'un par rapport à l'autre, permettant ainsi au siège (20) de tourner par rapport à la carrosserie (10), la goupille (50) servant d'axe de rotation.

13. Véhicule à selle selon l'une quelconque des revendications 1 à 12, dans lequel l'amortisseur (33) est constitué d'un caoutchouc ayant une dureté de 30 à 60 degrés.

14. Véhicule à selle selon l'une quelconque des revendications 1 à 13, dans lequel :
un diamètre intérieur de l'amortisseur (33) est de 7 à 12 mm ; et
un diamètre extérieur de l'amortisseur (33) est de 15 à 24 mm.

15. Véhicule à selle selon l'une quelconque des revendications 1 à 14, dans lequel :
l'amortisseur (33) a une surface circonférentielle intérieure ; et
une pluralité de rainures (33t) s'étendant dans la direction gauche-droite sont formées sur la surface circonférentielle intérieure.
